# EUROPÄISCHE PATENTSCHRIFT

(11) **EP 3 603 011 B1**
(45) Veröffentlichungstag und Bekanntmachung des Hinweises auf die Patenterteilung: **22.03.2023**
(21) Anmeldenummer: 18723422.4
(22) Anmeldetag: 20.04.2018
(51) Int. Cl.: H04L 9/40, H04W 4/42, H04W 4/44, H04L 67/12, H04L 69/18, H04W 12/06, H04W 12/082, H04W 12/108

(54) **VORRICHTUNGEN UND VERFAHREN ZUM BETREIBEN EINER MOBILFUNKKOMMUNIKATION MIT EINER STRECKENSEITIGEN EINRICHTUNG**
APPARATUSES AND METHOD FOR OPERATING MOBILE RADIO COMMUNICATION WITH A TRACK-MOUNTED APPARATUS
DISPOSITIFS ET PROCÉDÉ DE FONCTIONNEMENT D'UNE COMMUNICATION MOBILE AVEC UN DISPOSITIF CÔTÉ TRAJET

(30) Priorität: 23.05.2017 DE 102017208712
(43) Veröffentlichungstag der Anmeldung: 05.02.2020
(73) Patentinhaber: Siemens Mobility GmbH, 81739 München (DE)
(72) Erfinder: KENDELBACHER, Detlef, 13129 Berlin (DE); STEIN, Fabrice, 12621 Berlin (DE)
(74) Vertreter: Siemens Patent Attorneys
(86) Internationale Anmeldenummer: PCT/EP2018/060143
(87) Internationale Veröffentlichungsnummer: WO 2018/215145

(56) Entgegenhaltungen:
- US-A1- 2013 104 186
- US-A1- 2015 150 124
- Tomas Magyla Dr: "European train control system over IP: the challenges", , 1. Januar 2015 (2015-01-01), XP055491125, Gefunden im Internet: URL:http://railknowledgebank.com/Presto/co ntent/Detail.aspx?ctID=MTk4MTRjNDUtNWQ0My0 0OTBmLTllYWUtZWFjM2U2OTE0ZDY3&rID=NDA5NQ== &sID=MTE=&ph=VHJ1ZQ==&qcf=&bckToL=VHJ1ZQ== [gefunden am 2018-07-09]
- Ritesh Madapurath: "VRF & Linux Network Name Space", , 17. Februar 2014 (2014-02-17), XP055491197, Gefunden im Internet: URL:http://rmadapur.blogspot.com/2014/02/v rf-linux-network-name-space.html [gefunden am 2018-07-09]

## Beschreibung

Die Erfindung bezieht sich auf eine Kommunikationsanordnung für ein Fahrzeug, die zum Betreiben einer Mobilfunkkommunikation mit einer streckenseitigen Einrichtung geeignet ist und einen Fahrzeugrechner und zumindest eine Mobilfunkeinrichtung für eine Funkverbindung mit der streckenseitigen Einrichtung aufweist. Eine solche Kommunikationsanordnung wird von der Siemens AG für den Schienenverkehr unter dem Produktnamen "Trainguard" angeboten; die von Siemens vertriebene Kommunikationsanordnung entspricht dem European Train Control System (ETCS)-Standard.

Aus der US 2013/104186 A1 ist ein System und ein Verfahren zum Verhindern eines Angriffs auf ein vernetztes Fahrzeug bekannt.

In einem European Train Control System ist für die Datenübermittlung zwischen streckenseitigen Steuereinrichtungen (RBC - Radio Block Centre) und den gesteuerten Fahrzeugen (OBU - On Board Unit) die Nutzung von verbindungsorientierten (CS - circuit switched) und verbindungslosen (PS - packet switched) Datendiensten vorgesehen. Die mittels GSM-R (R - Railway / Eisenbahn) und GPRS durchgeführte Datenübertragung erfolgt über offene Mobilfunknetze der Bahnen. Die übertragenen Steuerungsdaten besitzen Sicherheitsverantwortung und sind mit kryptologischen Verfahren Ende-zu-Ende geschützt.

Neben zufälligen und systematischen Fehlern existieren durch die offenen Netze Gefährdungen durch intelligente Angriffe (Cyberattacken). Sowohl die Einbindung der Bahneinrichtungen in offene Netze als auch Umfang und Komplexität der Cyberattacken nehmen seit Jahren stetig zu, woraus sich für die Sicherheit und Verfügbarkeit der Bahneinrichtungen steigende Risiken ergeben. Das Thema Sicherheit ("Security") im Sinne von Schutz vor Bedrohungen durch Hackerangriffe gewinnt deshalb für vernetzte Bahneinrichtungen neben der klassischen signaltechnischen Sicherheit zunehmend Aufmerksamkeit und Bedeutung.

Für die im ETCS genutzten GSM-basierten Mobilfunknetze der 2. Generation (2G) sind zahlreiche Sicherheitslücken (sogenannte "Vulnerabilities") bekannt, die potentiell für Cyberangriffe ausnutzbar sind. Es wurden Werkzeuge und Technologien entwickelt und verbreitet, mit denen Cyberangriffe einfach durchführbar sind. Das Wissen und die benötigten Hilfsmittel sind meist leicht im Internet beschaffbar. Durch stetigen Preisverfall kann sich faktisch jedermann zu moderaten Kosten leistungsfähige und komfortabel anzuwendende Hilfsmittel für Cyberangriffe beschaffen.

GSM-R Netze arbeiten zwar in einem speziellen für die Eisenbahn reservierten Frequenzband, das spezielle Endgeräte erfordert, dennoch ist das GSM-R Funknetz mit der heute verfügbaren Hacker-Technologie für Cyberattacken erreichbar, so dass trotz des versetzten Frequenzspektrums kein wirksamer Hackerschutz besteht und das Bahnnetz als öffentliches Netz betrachtet werden muss.

Manipulierte Datenverbindungen im ETCS werden zwar in der Regel durch die normative Ende-zu-Ende Kryptosicherung erkannt, jedoch schützt diese nicht vor den möglichen betriebsbehindernden Auswirkungen von Cyberangriffen, bei denen es im Zugverkehr zu Verspätungen und Stillstand kommen kann.

Neben den Angriffen auf die sicherheitskritische Datenübertragung ist das Eindringen in die Rechner und Übertragungseinrichtungen der Bahnanlagen eine weitere Bedrohung. Durch Manipulation von Systemsoftware, beispielsweise durch Einbringen zusätzlicher Schadprogramme, kann die Funktion und Integrität sicherheitsrelevanter Bahneinrichtungen verändert werden, wodurch die Systemsicherheit gefährdet ist. Auch ein schrittweises Eindringen und Übernehmen von Kommunikationsund Rechnerkomponenten in komplexen Bahnanlagen, wie der ETCS Onboard Unit (OBU), ist eine realistisch anzunehmende Bedrohung.

Das erreichbare Maß an Sicherheit einer ETCS-Einrichtung wird maßgeblich durch Systemarchitektur, Übertragungsprotokolle, Schnittstellen, Hardware und Software bestimmt. Während die Systemarchitektur, die Schnittstellen und die Übertragungsprotokolle für die ETCS Mobilfunkkommunikation durch europäischen Standard festgelegt sind, besteht hinsichtlich der verwendeten Hardware und Software Freiraum für die Hersteller von ETCS-Einrichtungen. Im Rahmen des herstellerspezifischen Designs von Hard- und Software müssen die Sicherheitsanforderungen, für die es derzeit noch keine normativen Vorgaben gibt, ausreichend berücksichtigt werden, um die Produktsicherheit über die Lebensdauer der Anlage gewährleisten zu können.

Der Erfindung liegt die Aufgabe zugrunde, eine Kommunikationsanordnung anzugeben, die einen besonders guten Schutz vor unberechtigtem Zugriff, insbesondere Cyberattacken, bietet.

Diese Aufgabe wird erfindungsgemäß durch eine Kommunikationsanordnung mit den Merkmalen gemäß Patentanspruch 1 gelöst. Vorteilhafte Ausgestaltungen der erfindungsgemäßen Kommunikationsanordnung sind in Unteransprüchen angegeben.

Danach ist erfindungsgemäß vorgesehen, dass der Fahrzeugrechner und die Mobilfunkeinrichtung nicht unmittelbar miteinander, sondern mittels eines Kommunikationsrechners und einer Schutzeinrichtung verbunden sind, der Kommunikationsrechner über zumindest eine rechnerseitige Schnittstelle mit dem Fahrzeugrechner und über zumindest eine schutzeinrichtungsseitige Schnittstelle mit der Schutzeinrichtung in Verbindung steht und die Schutzeinrichtung mit der zumindest einen Mobilfunkeinrichtung über eine Mobilfunkgeräteschnittstelle in Verbindung steht, wobei sich die schutzeinrichtungsseitige Schnittstelle von der Mobilfunkgeräteschnittstelle unterscheidet oder anders als diese betrieben wird und sich außerdem von der rechnerseitigen Schnittstelle unterscheidet oder anders als diese betrieben wird.

Ein wesentlicher Vorteil der erfindungsgemäßen Kommunikationsanordnung ist darin zu sehen, dass diese aufgrund ihrer kaskadiert angeordneten Schnittstellen zumindest drei Sicherheitszonen bildet, nämlich eine erste, die die Mobilfunkeinrichtung und die Schutzeinrichtung umfasst, eine zweite, die den Kommunikationsrechner umfasst, und eine dritte, die den sicheren Fahrzeugrechner umfasst. Jede Zone und jeder Zonenübergang kann für sich individuell geschützt werden, wodurch sich insgesamt ein sehr hohes Sicherheitsniveau erreichen lässt.

Bei einer bevorzugten Ausführungsvariante ist vorgesehen, dass der Kommunikationsrechner und die Schutzeinrichtung jeweils durch eine eigene Rechnereinrichtung, insbesondere einen eigenen Mikrorechner, gebildet werden.

Bei einer anderen bevorzugten Ausführungsvariante ist vorgesehen, dass die Schutzeinrichtung durch einen virtuellen Rechner innerhalb einer auch den Kommunikationsrechner bildenden Rechenanordnung gebildet wird.

Bei einer noch anderen bevorzugten Ausführungsvariante ist vorgesehen, dass die Schutzeinrichtung innerhalb einer auch den Kommunikationsrechner bildenden Rechenanordnung als Software implementiert ist und durch Separation des Internetprotokolls TCP/IP von übrigen nichtsicheren Euroradio- und Kommunikationsprotokollen, beispielsweise mittels NETWORK NAMESPACES Technologie, innerhalb des Kommunikationsrechners gebildet wird.

Auch ist es vorteilhaft, wenn die Kommunikationsanordnung eine erste und eine zweite Schutzeinrichtung und eine erste und eine zweite Mobilfunkeinrichtung aufweist, der Kommunikationsrechner über zumindest eine erste schutzeinrichtungsseitige Schnittstelle mit der ersten Schutzeinrichtung in Verbindung steht und über zumindest eine zweite schutzeinrichtungsseitige Schnittstelle mit der zweiten Schutzeinrichtung in Verbindung steht und die erste Schutzeinrichtung mit der ersten Mobilfunkeinrichtung über eine erste Mobilfunkgeräteschnittstelle in Verbindung steht und die zweite Schutzeinrichtung mit der zweiten Mobilfunkeinrichtung über eine zweite Mobilfunkgeräteschnittstelle in Verbindung steht, wobei sich die erste und zweite schutzeinrichtungsseitige Schnittstelle von der ersten und zweiten Mobilfunkgeräteschnittstelle unterscheiden oder anders als diese betrieben werden und sich außerdem von der rechnerseitigen Schnittstelle unterscheiden oder anders als diese betrieben werden.

Bei der Kommunikationsanordnung handelt es sich erfindungsgemäß um eine ETCS-kompatible Anordnung. Der Fahrzeugrechner ist demgemäß ein EVC(European Vital Computer)-Rechner gemäß ETCS-Norm. Der Kommunikationsrechner ist signaltechnisch nichtsicher oder zumindest signaltechnisch unsicherer als der Fahrzeugrechner.

Erfindungsgemäß sind die Schutzeinrichtung oder Schutzeinrichtungen derart ausgebildet, dass folgende Funktionen geschützt betrieben werden:
- ungesicherte Euroradio-Protokolle für eine verbindungsorientierte Mobilfunk-Kommunikation, insbesondere gemäß HDLC, T.70- und/oder TP2-Norm, und für eine verbindungslose Mobilfunk-Kommunikation, insbesondere gemäß 3G TS 27.010-, PPP- und/oder TCP/IP- Norm,
- Kommunikationsprotokolle der jeweiligen MobilfunkgeräteSchnittstelle und
- Kommunikationsprotokolle der jeweiligen schutzeinrichtungsseitigen Schnittstelle zum Kommunikationsrechner.

Der Kommunikationsrechner ist bevorzugt derart ausgebildet, dass von diesem betrieben werden:
- Funktionen für die Verwaltung und Steuerung der Schutzeinrichtung und des zumindest einen Mobilfunkgeräts sowie
- Übertragungsprotokolle zur Kopplung an die rechnerseitige Schnittstelle und die schutzeinrichtungsseitige Schnittstelle.

Der Kommunikationsrechner und jede der Schutzeinrichtungen sind bevorzugt jeweils über drei logische Schnittstellen gekoppelt, nämlich eine erste logische Schnittstelle zur Übergabe von Steuerungskommandos vom Kommunikationsrechner an die jeweilige Schutzeinrichtung und von Rückmeldungen von der jeweiligen Schutzeinrichtung an den Kommunikationsrechner, eine zweite logische Schnittstelle zum bidirektionalen Transport von Nutzdaten der ETCS-Applikation und eine dritte logische Schnittstelle zum Rücksetzen der jeweiligen Schutzeinrichtung durch den Kommunikationsrechner.

Der Kommunikationsrechner ist vorzugsweise mit jeder Mobilfunkeinrichtung über eine Schnittstelle zum Rücksetzen der an die jeweilige Schutzeinrichtung angeschlossenen Mobilfunkeinrichtung durch den Kommunikationsrechner verbunden.

Auf der oder den Schutzeinrichtungen ablaufende Software ist vorzugsweise gegen ungewollte Veränderung geschützt, vorzugsweise durch einen Hardware-basierten Integritätsschutz, insbesondere mittels fuse-bits.

Die Schnittstelle oder Schnittstellen zwischen dem Kommunikationsrechner und der oder den Schutzeinrichtungen sind vorzugsweise gegen Cyberangriffe geschützt.

Auch ist es von Vorteil, wenn das Weiterleiten von Datenströmen und die Verwaltungs- und Steuerungsfunktionen im Kommunikationsrechner mindestens teilweise überwacht, plausibilisiert und gegen Cyberangriffe geschützt sind, so dass Cyberangriffe auf die zumindest eine Mobilfunkeinrichtung und/oder die zumindest eine Schutzeinrichtung im Kommunikationsrechner offenbart und abgewehrt werden können.

Die Kopplung zwischen dem Kommunikationsrechner und dem Fahrzeugrechner ist vorzugsweise gegen Cyberangriffe geschützt, wodurch Cyberangriffe auf den Fahrzeugrechner abgewehrt werden können.

Die Erfindung bezieht sich darüber hinaus auf ein Fahrzeug, insbesondere Schienenfahrzeug, das mit einer Kommunikationsanordnung, wie sie oben beschrieben ist, ausgestattet ist.

Die Erfindung bezieht sich darüber hinaus auf ein Verfahren zum Betreiben einer Mobilfunkkommunikation gemäß Patentanspruch 14 zwischen einem Fahrzeug und einer streckenseitigen Einrichtung, wobei das Fahrzeug einen Fahrzeugrechner und zumindest eine Mobilfunkeinrichtung für eine Funkverbindung mit der streckenseitigen Einrichtung aufweist.

Erfindungsgemäß ist vorgesehen, dass Informationen zwischen dem Fahrzeugrechner und der Mobilfunkeinrichtung nicht unmittelbar untereinander, sondern mittelbar über einen Kommunikationsrechner und zumindest eine Schutzeinrichtung übertragen werden, wobei der Kommunikationsrechner über eine rechnerseitige Schnittstelle mit dem Fahrzeugrechner und über eine schutzeinrichtungsseitige Schnittstelle mit der zumindest einen Schutzeinrichtung in Verbindung steht und die Schutzeinrichtung mit der zumindest einen Mobilfunkeinrichtung über eine Mobilfunkgeräteschnittstelle in Verbindung steht, und sich die mindestens eine schutzeinrichtungsseitige Schnittstelle von der Mobilfunkgeräteschnittstelle unterscheidet oder anders als diese betrieben wird und sich außerdem von der rechnerseitigen Schnittstelle unterscheidet oder anders als diese betrieben wird.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit der erfindungsgemäßen Kommunikationsanordnung verwiesen.

Vorteilhaft ist es, wenn im Falle von erkannten Cyberangriffen von dem Kommunikationsrechner an die betroffene Mobilfunkeinrichtung und/oder die betroffene Schutzeinrichtung ein Rücksetzbefehl ausgegeben wird, wodurch Blockaden und Fehlfunktionen dieser Komponenten, beispielsweise ausgelöst durch DoS-Attacken, jederzeit beendet werden können.

Auch ist es von Vorteil, wenn im Falle von erkannten Cyberangriffen bezüglich der betroffenen Mobilfunkeinrichtung und/oder der betroffenen Schutzeinrichtung vom Kommunikationsrechner Meldungen generiert und abgespeichert werden, die Rückschlüsse auf die stattgefundenen Ereignisse und deren Wirkungen im Fahrzeug zulassen.

Nichtsichere Kommunikationsprotokolle für die verbindungsorientierte und verbindungslose ETCS-Mobilfunkkommunikation sind vorzugsweise in einer virtuellen Rechnerumgebung im Kommunikationsrechner angeordnet, so dass diese von den übrigen Funktionen im Kommunikationsrechner entkoppelt ablaufen und vom Kommunikationsrechner jederzeit in ihren Anfangszustand zurückgesetzt werden können.

Das Internetprotokoll TCP/IP für die verbindungslose ETCS-Mobilfunkkommunikation wird vorzugsweise im Kommunikationsrechner separiert, beispielsweise mittels NETWORK NAMESPACES Technologie, so dass dieses von den übrigen Funktionen im Kommunikationsrechner entkoppelt und in einem isolierten IP-Adressraum abläuft und vom Kommunikationsrechner jederzeit in seinen Anfangszustand zurückgesetzt werden kann.

Die Erfindung wird nachfolgend anhand von Ausführungsbeispielen näher erläutert; dabei zeigen beispielhaft
- Figur 1: ein Ausführungsbeispiel für eine erfindungsgemäße Kommunikationsanordnung, bei der Schutzeinrichtungen jeweils hardwaremäßig durch eigene Rechnereinrichtungen realisiert sind,
- Figur 2: ein Ausführungsbeispiel für eine erfindungsgemäße Kommunikationsanordnung, bei der Schutzeinrichtungen softwaremäßig in einer auch den Kommunikationsrechner bildenden Rechenanordnung implementiert und bezüglich ihrer IP-Adressierung separiert sind,
- Figur 3: ein Ausführungsbeispiel für eine erfindungsgemäße Kommunikationsanordnung, bei der Schutzeinrichtungen in virtuellen Rechnern einer auch den Kommunikationsrechner bildenden Rechenanordnung implementiert sind, und
- Figur 4: ein Ausführungsbeispiel für ein Schienenfahrzeug, das mit einer Kommunikationsanordnung gemäß den Figuren 1 bis 3 ausgestattet ist.

In den Figuren werden der Übersicht halber für identische oder vergleichbare Komponenten stets dieselben Bezugszeichen verwendet.

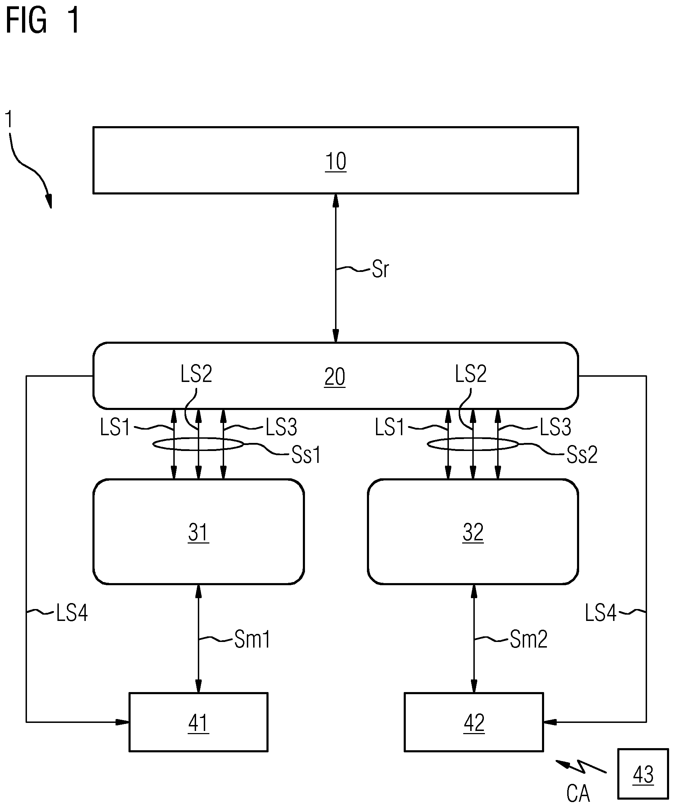

Die Figur 1 zeigt eine Kommunikationsanordnung 1, die einen Fahrzeugrechner 10, einen Kommunikationsrechner 20, eine erste Schutzeinrichtung 31, eine zweite Schutzeinrichtung 32, eine erste Mobilfunkeinrichtung 41 und eine zweite Mobilfunkeinrichtung 42 umfasst.

Der Kommunikationsrechner 20 steht über eine rechnerseitige Schnittstelle Sr mit dem Fahrzeugrechner 10 in Verbindung. Darüber hinaus ist der Kommunikationsrechner 20 an die beiden Schutzeinrichtungen 31 und 32 angeschlossen, und zwar über eine erste schutzeinrichtungsseitige Schnittstelle Ss1 an die erste Schutzeinrichtung 31 und eine zweite schutzeinrichtungsseitige Schnittstelle Ss2 an die zweite Schutzeinrichtung 32.

Jede der beiden Schutzreinrichtungen 31 und 32 ist mit einer zugeordneten Mobilfunkeinrichtung 41 bzw. 42 verbunden; die Verbindung zwischen der ersten Schutzeinrichtung 31 und der ersten Mobilfunkeinrichtung 41 basiert auf einer ersten Mobilfunkgeräteschnittstelle Sm1 und die Verbindung zwischen der zweiten Schutzeinrichtung 32 und der zweiten Mobilfunkeinrichtung 42 basiert auf einer zweiten Mobilfunkgeräteschnittstelle Sm2.

Die Hauptfunktion der beiden Schutzeinrichtungen 31 und 32 besteht darin, den Kommunikationsrechner 20 vor Cyberangriffen auf die beiden Mobilfunkeinrichtungen 41 und 42 und auf die in den Schutzeinrichtungen ablaufenden nichtsicheren Euroradioprotokolle, insbesondere auf das TCP/IP Protokoll abzuschirmen. Durch diese Abschottung werden auch Zugriffe auf den Fahrzeugrechner 10 verhindert oder zumindest erschwert.

Mit Blick auf einen möglichst guten Schutz vor Cyberattacken sind die beiden schutzeinrichtungsseitigen Schnittstellen Ss1 und Ss2 anders ausgebildet als die Mobilfunkgeräteschnittstellen Sm1 und Sm2 oder werden zumindest anders als diese betrieben. Mit anderen Worten bilden die Schutzeinrichtungen 31 und 32 eine Schnittstellen- bzw. Protokollumsetzung, so dass Cyberangriffe, die auf den Kommunikationsrechner 20 Zugriff erhalten wollen, auch diese Schnittstellenumsetzung durchführen und die jeweilige Schutzeinrichtung 31 bzw. 32 überwinden müssen.

Die Kommunikationsanordnung 1 ist vorzugsweise eine ETCS-kompatible Anordnung. Im Falle einer solchen Ausgestaltung wird der Fahrzeugrechner 10 vorzugsweise durch einen sogenannten EVC (European Vital Computer)-Rechner gemäß der ETCS-Norm gebildet. Der Kommunikationsrechner 20 kann signaltechnisch nichtsicher bzw. signaltechnisch weniger sicher als der Fahrzeugrechner 10 ausgebildet sein. Bei dem Kommunikationsrechner 20 kann es sich beispielsweise um einen sogenannten NVC (Non Vital Computer) handeln, wie er bei ETCS-kompatiblen Anordnungen heutzutage eingesetzt wird.

Die Funktion des Kommunikationsrechners 20 besteht vorzugsweise darin, Funktionen für die Verwaltung und Steuerung der beiden Schutzeinrichtungen 31 und 32 und der beiden Mobilfunkgeräte 41 und 42 wahrzunehmen sowie Übertragungsprotokolle zur Kopplung an die rechnerseitige Schnittstelle Sr und die beiden schutzeinrichtungsseitigen Schnittstellen Ss1 und Ss2 zu betreiben.

Die Funktion der beiden Schutzeinrichtungen 31 und 32 besteht vorzugsweise darin, folgende Funktionen geschützt zu betreiben:
- ungesicherte Euroradio-Protokolle für eine verbindungsorientierte Mobilfunk-Kommunikation, insbesondere gemäß HDLC, T.70- und/oder TP2-Norm, und für eine verbindungslose Mobilfunk-Kommunikation, insbesondere gemäß 3G TS 27.010-, PPP- und/oder TCP/IP- Norm,
- Kommunikationsprotokolle der jeweiligen MobilfunkgeräteSchnittstelle und
- Kommunikationsprotokolle der jeweiligen schutzeinrichtungsseitigen Schnittstelle zum Kommunikationsrechner.

Bei dem Ausführungsbeispiel gemäß Figur 1 bilden die beiden schutzeinrichtungsseitigen Schnittstellen Ss1 und Ss2 jeweils drei logische Schnittstellen, die den Kommunikationsrechner 20 mit der jeweiligen Schutzeinrichtung 31 bzw. 32 koppeln. Die drei logischen Schnittstellen sind in der Figur 1 mit den Bezugszeichen LS1, LS2 und LS3 gekennzeichnet.

Bei der ersten logischen Schnittstelle LS1 handelt es sich vorzugsweise um eine Schnittstelle zur Übergabe von Steuerungskommandos vom Kommunikationsrechner 20 an die jeweilige Schutzeinrichtung 31 bzw. 32 und von Rückmeldungen von der jeweiligen Schutzeinrichtung 31 bzw. 32 an den Kommunikationsrechner 20.

Bei der zweiten logischen Schnittstelle LS2 handelt es sich vorzugsweise um eine Schnittstelle zum bidirektionalen Transport von Nutzdaten der ETCS-Applikation zwischen dem Kommunikationsrechner 20 und der jeweiligen Schutzeinrichtung 31 und 32.

Bei der dritten logischen Schnittstelle LS3 handelt es sich vorzugsweise um eine Schnittstelle zum Rücksetzen der jeweiligen Schutzeinrichtung 31 bzw. 32 durch den Kommunikationsrechner 20, beispielsweise im Falle einer erkannten Cyberattacke, die womöglich die Funktionsweise der Schutzeinrichtungen 31 und 32 blockiert, verändert oder kompromittiert haben könnte.

Vorteilhaft ist es außerdem, wenn der Kommunikationsrechner 20 die beiden Mobilfunkeinrichtungen 41 und 42 direkt selbst zurücksetzen kann, sei es mittelbar unter Einbezug der Schutzeinrichtungen 31 und 32 unter Nutzung der beiden Mobilfunkgeräteschnittstellen Sm1 und/oder Sm2 oder über eine separate direkte Schnittstelle zwischen dem Kommunikationsrechner 20 und den beiden Mobilfunkeinrichtungen 41 und 42; eine solche separate direkte Schnittstelle ist in der Figur 1 eingezeichnet und mit dem Bezuszeichen LS4 gekennzeichnet.

Die Kommunikationsanordnung 1 gemäß Figur 1 wird vorzugsweise wie folgt betrieben:
Informationen zwischen dem Fahrzeugrechner 10 und dem Mobilfunkeinrichtungen 41 und 42 werden nicht unmittelbar untereinander, sondern über den Kommunikationsrechner 20 und die Schutzeinrichtungen 31 und/oder 32 übertragen. Mit Blick auf einen optimalen Schutz vor Cyberattacken CA durch einen intelligenten Angreifer, sinngemäß dargestellt durch die Mobilfunkeinrichtung 43 in Figur 1, werden die schutzeinrichtungsseitigen Schnittstellen Ss1 und Ss2 anders als die Mobilfunkgeräteschnittstellen Sm1 und Sm2 sowie auch anders als die rechnerseitige Schnittstelle Sr betrieben. Durch die kaskadierten Schnittstellen wird ein optimaler Schutz des Fahrzeugrechners 10 vor einer etwaigen Cyberattacke CA erreicht.

Gelingt es einem Angreifer, das TCP/IP Protokoll in einer Schutzeinrichtung oder die gesamte Schutzeinrichtung unter seine Kontrolle zu bekommen, kann der IP-basierte Angriff nicht auf den Kommunikationsrechner ausgeweitet werden, da die IP-Kommunikation in der Schutzeinrichtung vollständig entkoppelt von der IP-Kommunikation im restlichen Fahrzeug abläuft.

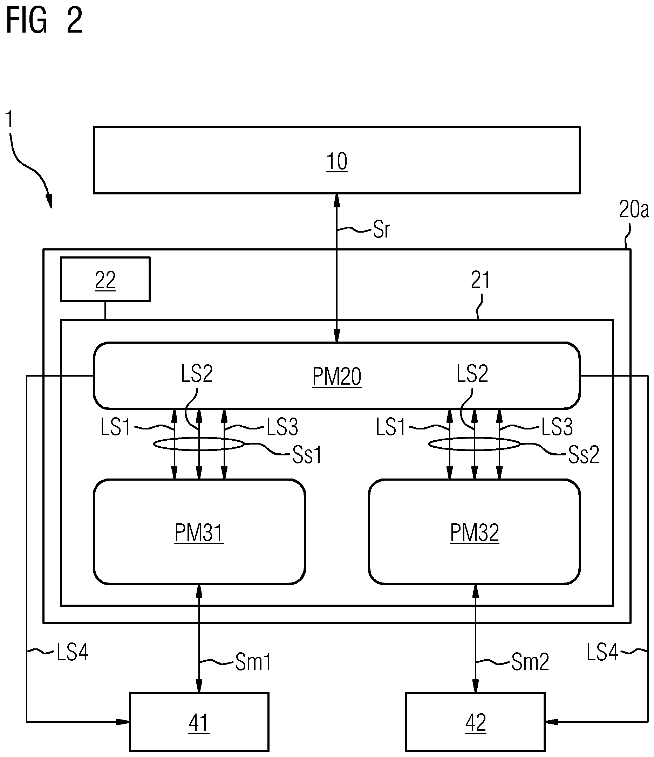

Die Figur 2 zeigt eine Kommunikationsanordnung 1, bei der die zwei Schutzeinrichtungen 31 und 32 gemäß Figur 1 durch Programm- bzw. Softwaremodule PM31 und PM32 gebildet werden. Die beiden Softwaremodule PM31 und PM32 sind in einem Speicher 21 einer Rechenanordnung 20a abgespeichert. Der Speicher 21 steht mit einer Recheneinrichtung 22 der Rechenanordnung 20a in Verbindung. Führt die Recheneinrichtung 22 die Softwaremodule PM31 und PM32 aus, so bildet sie die Schutzeinrichtungen 31 bzw. 32, deren Funktion und Arbeitsweise oben im Zusammenhang mit der Figur 1 bereits erläutert worden ist. Diesbezüglich sei auf die obigen Ausführungen verwiesen.

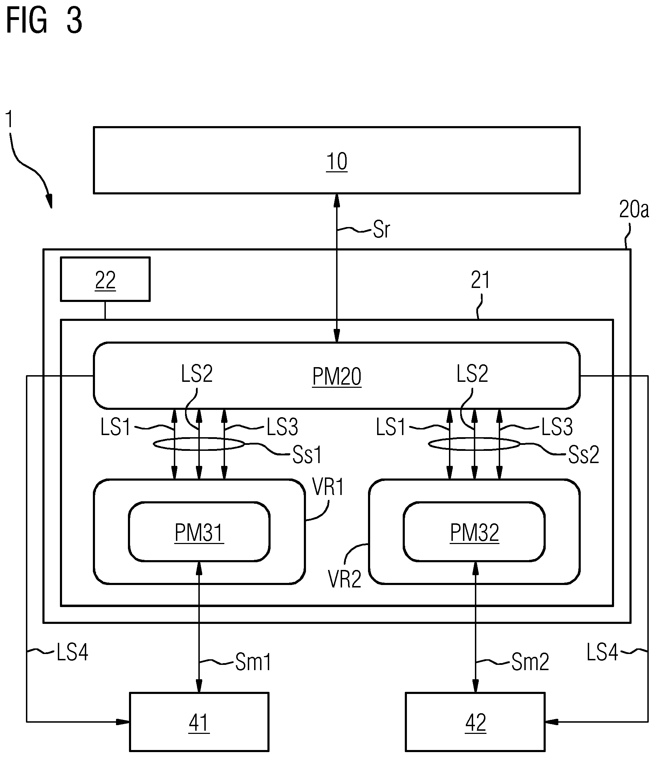

Die Ausbildung der Schutzeinrichtungen 31 bzw. 32 kann durch verschiedene Software-Technologien erfolgen, beispielsweise durch Unterbringen in virtuellen Rechnern (wie beispielhaft in Figur 3 gezeigt) oder durch protokolltechnische Entkopplung, beispielsweise mittels NETWORK-NAMESPACES, (wie in Figur 2 gezeigt).

Der Speicher 21 der Rechenanordnung 20a umfasst darüber hinaus ein Programm- bzw. Softwaremodul PM20, das bei Ausführung durch die Recheneinrichtung 22 dafür sorgt, dass diese den Kommunikationsrechner 20 gemäß Figur 1 bildet. Bezüglich der Funktionsweise des Kommunikationsrechners 20 sei auf die obigen Ausführungen im Zusammenhang mit Figur 1 verwiesen.

Die beiden schutzeinrichtungsseitigen Schnittstellen Ss1 und Ss2 gemäß Figur 1 werden bei der Ausführungsvariante gemäß Figur 2 durch entsprechende Softwareschnittstellen zwischen den Softwaremodulen PM20 und PM31 bzw. PM20 und PM32 gebildet.

Im Übrigen gelten die obigen Ausführungen und Erläuterungen im Zusammenhang mit dem Ausführungsbeispiel gemäß Figur 1 für das Ausführungsbeispiel gemäß Figur 2 entsprechend.

Die Figur 3 zeigt ein Ausführungsbeispiel für eine Rechenanordnung 20a, bei der die beiden Schutzeinrichtungen 31 und 32 durch Softwaremodule PM31 und PM32 gebildet werden, die in virtuellen Rechnern ablaufen. Die virtuellen Rechner sind softwaremäßig realisiert und als Softwaremodule VR1 und VR2 in einem Speicher 21 der Rechenanordnung 20a abgespeichert.

Führt die Recheneinrichtung 22 die Softwaremodule VR1 und VR2 aus, so erzeugt sie die virtuellen Rechner, die wiederum die Softwaremodule PM31 und PM32 ausführen, so dass Schutzeinrichtungen 31 und 32 gebildet werden, wie sie oben im Zusammenhang mit der Figur 1 bereits erläutert worden sind.

Der Speicher 21 der Rechenanordnung 20a umfasst darüber hinaus ein Softwaremodul PM20, das bei Ausführung durch die Recheneinrichtung 22 dafür sorgt, dass diese den Kommunikationsrechner 20 gemäß Figur 1 bildet. Bezüglich der Funktionsweise des Kommunikationsrechners 20 sei auf die obigen Ausführungen im Zusammenhang mit Figur 1 verwiesen.

Die beiden schutzeinrichtungsseitigen Schnittstellen Ss1 und Ss2 gemäß Figur 1 werden bei der Ausführungsvariante gemäß Figur 3 durch Softwareschnittstellen zwischen den Softwaremodulen PM20 und PM31 bzw. PM20 und PM32 gebildet.

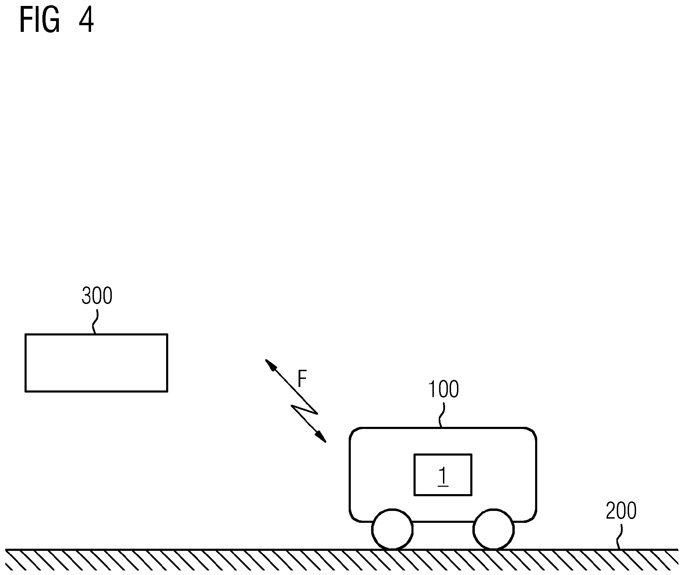

Die Figur 4 zeigt beispielhaft ein Schienenfahrzeug 100, das auf einer Strecke 200 fährt. Die Strecke 200 ist mit einer streckenseitigen Einrichtung 300 ausgestattet. Zur Kommunikation zwischen dem Schienenfahrzeug 100 und der streckenseitigen Einrichtung 300 ist das Schienenfahrzeug 100 mit einer Kommunikationsanordnung 1 ausgestattet, bei der es sich beispielsweise um eine Kommunikationsanordnung handeln kann, wie sie im Zusammenhang mit den Figuren 1 bis 3 oben erläutert worden ist. Die Kommunikationsanordnung 1 erlaubt eine Funkverbindung F mit der streckenseitigen Einrichtung 300, so dass diese das Schienenfahrzeug 100 sowie insgesamt den Verkehr auf der Strecke 200 steuern bzw. leiten kann. Bezüglich der Arbeitsweise der Kommunikationsanordnung 1 sei auf die obigen Ausführungen im Zusammenhang mit den Figuren 1 bis 3 verwiesen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Kommunikationsanordnung
- 10: Fahrzeugrechner
- 20: Kommunikationsrechner
- 20a: Rechenanordnung
- 21: Speicher
- 22: Recheneinrichtung
- 31: Schutzeinrichtung
- 32: Schutzeinrichtung
- 41: Mobilfunkeinrichtung
- 42: Mobilfunkeinrichtung
- 43: Mobilfunkeinrichtung
- 100: Schienenfahrzeug
- 200: Strecke
- 300: Einrichtung

- CA: Cyberattacke
- F: Funkverbindung
- LS1: Schnittstelle
- LS2: Schnittstelle
- LS3: Schnittstelle
- PM20: Softwaremodul
- PM31: Softwaremodul
- PM32: Softwaremodul
- Sm1: Mobilfunkgeräteschnittstelle
- Sm2: Mobilfunkgeräteschnittstelle
- Sr: Schnittstelle
- Ss1: Schnittstelle
- Ss2: Schnittstelle

## Patentansprüche

1. Kommunikationsanordnung (1) für ein Schienenfahrzeug (100) zum Betreiben einer Mobilfunkkommunikation mit einer streckenseitigen Einrichtung (300), wobei die Kommunikationsanordnung (1) einen Fahrzeugrechner (10), einen Kommunikationsrechner (20), zumindest eine Schutzeinrichtung (31, 32) und zumindest eine Mobilfunkeinrichtung (41, 42) für eine Funkverbindung (F) mit der streckenseitigen Einrichtung (300) aufweist, wobei die Kommunikationsanordnung (1) eine ETCS-kompatible Anordnung ist, der Fahrzeugrechner (10) ein EVC(European Vital Computer)-Rechner gemäß ETCS-Norm ist und der Kommunikationsrechner (20) signaltechnisch unsicherer als der Fahrzeugrechner (10) ist, und
wobei
- der Fahrzeugrechner (10) und die Mobilfunkeinrichtung (41, 42) nicht unmittelbar miteinander, sondern mittels des Kommunikationsrechners (20) (NVC) und der Schutzeinrichtung (31, 32) verbunden sind,
- der Kommunikationsrechner (20) über zumindest eine rechnerseitige Schnittstelle (Sr) mit dem Fahrzeugrechner (10) und über zumindest eine schutzeinrichtungsseitige Schnittstelle (Ssl, Ss2) mit der Schutzeinrichtung (31, 32) in Verbindung steht und
- die Schutzeinrichtung (31, 32) mit der zumindest einen Mobilfunkeinrichtung (41, 42) über eine Mobilfunkgeräteschnittstelle (Sm1, Sm2) in Verbindung steht, wobei sich die schutzeinrichtungsseitige Schnittstelle (Ssl, Ss2) von der Mobilfunkgeräteschnittstelle (Sm1, Sm2) unterscheidet oder anders als diese betrieben wird und sich außerdem von der rechnerseitigen Schnittstelle (Sr) unterscheidet oder anders als diese betrieben wird, wobei die Schutzeinrichtung (31, 32) derart ausgebildet ist, dass folgende Funktionen geschützt betrieben werden:
- ungesicherte Euroradio-Protokolle für eine verbindungsorientierte Mobilfunk-Kommunikation und für eine verbindungslose Mobilfunk-Kommunikation,
- Kommunikationsprotokolle der jeweiligen MobilfunkgeräteSchnittstelle und
- Kommunikationsprotokolle der jeweiligen schutzeinrichtungsseitigen Schnittstelle (Ssl, Ss2) zum Kommunikationsrechner (20) .

2. Kommunikationsanordnung (1) nach Anspruch 1,
**dadurch gekennzeichnet, dass**
der Kommunikationsrechner (20) und die Schutzeinrichtung (31, 32) jeweils durch eine eigene Rechnereinrichtung gebildet wird.

3. Kommunikationsanordnung (1) nach Anspruch 1,
**dadurch gekennzeichnet, dass**
die Schutzeinrichtung (31, 32) durch einen virtuellen Rechner (VR1, VR2) innerhalb einer auch den Kommunikationsrechner (20) bildenden Rechenanordnung (20a) gebildet wird.

4. Kommunikationsanordnung (1) nach einem der voranstehenden Ansprüche,
**dadurch gekennzeichnet, dass**
die Schutzeinrichtung (31, 32) innerhalb einer auch den Kommunikationsrechner (20) bildenden Rechenanordnung (20a) als Software implementiert ist und durch Separation des Internetprotokolls TCP/IP von übrigen nichtsicheren Euroradio- und Kommunikationsprotokollen, beispielsweise mittels NETWORK NAMESPACES Technologie, innerhalb des Kommunikationsrechners (20) gebildet wird.

5. Kommunikationsanordnung (1) nach einem der voranstehenden Ansprüche,
**dadurch gekennzeichnet, dass**
- die Kommunikationsanordnung (1) eine erste und eine zweite Schutzeinrichtung (31, 32) und eine erste und eine zweite Mobilfunkeinrichtung (41, 42) aufweist,
- der Kommunikationsrechner (20) über zumindest eine erste schutzeinrichtungsseitige Schnittstelle (Ssl) mit der ersten Schutzeinrichtung (31) in Verbindung steht und über zumindest eine zweite schutzeinrichtungsseitige Schnittstelle (Ss2) mit der zweiten Schutzeinrichtung (32) in Verbindung steht und
- die erste Schutzeinrichtung (31) mit der ersten Mobilfunkeinrichtung (41) über eine erste Mobilfunkgeräteschnittstelle (Sm1) in Verbindung steht und die zweite Schutzeinrichtung (32) mit der zweiten Mobilfunkeinrichtung (42) über eine zweite Mobilfunkgeräteschnittstelle (Sm2) in Verbindung steht,
- wobei sich die erste und zweite schutzeinrichtungsseitige Schnittstelle (Ssl, Ss2) von der ersten und zweiten Mobilfunkgeräteschnittstelle (Sm1, Sm2) unterscheiden oder anders als diese betrieben werden und sich außerdem von der rechnerseitigen Schnittstelle (Sr) unterscheiden oder anders als diese betrieben werden.

6. Kommunikationsanordnung (1) nach einem der voranstehenden Ansprüche,
**dadurch gekennzeichnet, dass**
der Kommunikationsrechner (20) derart ausgebildet ist, dass von diesem betrieben werden:
- Funktionen für die Verwaltung und Steuerung der Schutzeinrichtung (31, 32) und des zumindest einen Mobilfunkgeräts sowie
- Übertragungsprotokolle zur Kopplung an die rechnerseitige Schnittstelle (Sr) und die schutzeinrichtungsseitige Schnittstelle (Ssl, Ss2).

7. Kommunikationsanordnung (1) nach einem der voranstehenden Ansprüche,
**dadurch gekennzeichnet, dass**
der Kommunikationsrechner (20) und jede der Schutzeinrichtungen (31, 32) jeweils über drei logische Schnittstellen (LS1, LS2, LS3) gekoppelt sind, nämlich
- eine erste logische Schnittstelle (LS1) zur Übergabe von Steuerungskommandos vom Kommunikationsrechner (20) an die jeweilige Schutzeinrichtung (31, 32) und von Rückmeldungen von der jeweiligen Schutzeinrichtung (31, 32) an den Kommunikationsrechner (20),
- eine zweite logische Schnittstelle (LS2) zum bidirektionalen Transport von Nutzdaten der ETCS-Applikation und
- eine dritte logische Schnittstelle (LS3) zum Rücksetzen der jeweiligen Schutzeinrichtung (31, 32) durch den Kommunikationsrechner (20) .

8. Kommunikationsanordnung (1) nach einem der voranstehenden Ansprüche,
**dadurch gekennzeichnet, dass**
der Kommunikationsrechner (20) mit jeder Mobilfunkeinrichtung (41, 42) über eine Schnittstelle (LS4) zum Rücksetzen der an die jeweilige Schutzeinrichtung (31, 32) angeschlossenen Mobilfunkeinrichtung (41, 42) durch den Kommunikationsrechner (20) verbunden ist.

9. Kommunikationsanordnung (1) nach einem der voranstehenden Ansprüche,
**dadurch gekennzeichnet, dass**
auf der oder den Schutzeinrichtungen (31, 32) ablaufende Software gegen ungewollte Veränderung geschützt ist, vorzugsweise durch einen Hardware-basierten Integritätsschutz.

10. Kommunikationsanordnung (1) nach einem der voranstehenden Ansprüche,
**dadurch gekennzeichnet, dass**
die Schnittstelle oder Schnittstellen (Ssl, Ss2) zwischen dem Kommunikationsrechner (20) und der oder den Schutzeinrichtungen (31, 32) gegen Cyberangriffe geschützt sind.

11. Kommunikationsanordnung (1) nach einem der voranstehenden Ansprüche,
**dadurch gekennzeichnet, dass**
das Weiterleiten von Datenströmen und die Verwaltungs- und Steuerungsfunktionen im Kommunikationsrechner (20) mindestens teilweise überwacht, plausibilisiert und gegen Cyberangriffe geschützt sind.

12. Kommunikationsanordnung (1) nach einem der voranstehenden Ansprüche,
**dadurch gekennzeichnet, dass**
die Kopplung zwischen dem Kommunikationsrechner (20) und dem Fahrzeugrechner (10) gegen Cyberangriffe geschützt ist, wodurch Cyberangriffe auf den Fahrzeugrechner (10) abgewehrt werden können.

13. Fahrzeug (100), das als ein Schienenfahrzeug ausgebildet ist,
**dadurch gekennzeichnet, dass**
dieses mit einer Kommunikationsanordnung (1) nach einem der voranstehenden Ansprüche ausgestattet ist.

14. Verfahren zum Betreiben einer Mobilfunkkommunikation zwischen einem Schienenfahrzeug (100) und einer streckenseitigen Einrichtung (300), wobei das Schienenfahrzeug (100) einen Fahrzeugrechner (10), einen Kommunikationsrechner (20), zumindest eine Schutzeinrichtung (31, 32) und zumindest eine Mobilfunkeinrichtung (41, 42) für eine Funkverbindung (F) mit der streckenseitigen Einrichtung (300) aufweist, wobei die Kommunikationsanordnung (1) eine ETCS-kompatible Anordnung ist, der Fahrzeugrechner (10) ein EVC(European Vital Computer)-Rechner gemäß ETCS-Norm ist und der Kommunikationsrechner (20) signaltechnisch unsicherer als der Fahrzeugrechner (10) ist,
wobei
- Informationen zwischen dem Fahrzeugrechner (10) und der Mobilfunkeinrichtung (41, 42) nicht unmittelbar untereinander, sondern mittelbar über den Kommunikationsrechner (20) (NVC) und die zumindest eine Schutzeinrichtung (31, 32) übertragen werden, wobei der Kommunikationsrechner (20) über eine rechnerseitige Schnittstelle (Sr) mit dem Fahrzeugrechner (10) und über eine schutzeinrichtungsseitige Schnittstelle (Ssl, Ss2) mit der zumindest einen Schutzeinrichtung (31, 32) in Verbindung steht und die Schutzeinrichtung (31, 32) mit der zumindest einen Mobilfunkeinrichtung (41, 42) über eine Mobilfunkgeräteschnittstelle (Sm1, Sm2) in Verbindung steht, und
- sich die mindestens eine schutzeinrichtungsseitige Schnittstelle (Ssl, Ss2) von der Mobilfunkgeräteschnittstelle (Sm1, Sm2) unterscheidet oder anders als diese betrieben wird und sich außerdem von der rechnerseitigen Schnittstelle (Sr) unterscheidet oder anders als diese betrieben wird, wobei die Schutzeinrichtung (31, 32) derart ausgebildet ist, dass folgende Funktionen geschützt betrieben werden:
- ungesicherte Euroradio-Protokolle für eine verbindungsorientierte Mobilfunk-Kommunikation und für eine verbindungslose Mobilfunk-Kommunikation,
- Kommunikationsprotokolle der jeweiligen MobilfunkgeräteSchnittstelle und
- Kommunikationsprotokolle der jeweiligen schutzeinrichtungsseitigen Schnittstelle (Ssl, Ss2) zum Kommunikationsrechner (20).

15. Verfahren nach Anspruch 14,
**dadurch gekennzeichnet, dass**
im Falle von erkannten Cyberangriffen von dem Kommunikationsrechner (20) an die betroffene Mobilfunkeinrichtung (41, 42) oder die betroffene Schutzeinrichtung (31, 32) ein Rücksetzbefehl ausgegeben wird, wodurch Blockaden und Fehlfunktionen dieser Komponenten, beispielsweise ausgelöst durch DoS-Attacken, jederzeit beendet werden können.

16. Verfahren nach einem der voranstehenden Ansprüche 14 bis 15,
**dadurch gekennzeichnet, dass**
im Falle von erkannten Cyberangriffen bezüglich der betroffenen Mobilfunkeinrichtung (41, 42) oder der betroffenen Schutzeinrichtung (31, 32) vom Kommunikationsrechner (20) Meldungen generiert und abgespeichert werden, die Rückschlüsse auf die stattgefundenen Ereignisse und deren Wirkungen im Fahrzeug (100) zulassen.

17. Verfahren nach einem der voranstehenden Ansprüche 14 bis 16,
**dadurch gekennzeichnet, dass**
ungesicherte Kommunikationsprotokolle für die verbindungsorientierte und verbindungslose ETCS-Mobilfunkkommunikation in einer virtuellen Rechnerumgebung im Kommunikationsrechner (20) angeordnet sind, so dass diese von den übrigen Funktionen im Kommunikationsrechner (20) entkoppelt ablaufen und vom Kommunikationsrechner (20) jederzeit in ihren Anfangszustand zurückgesetzt werden können.

18. Verfahren nach einem der voranstehenden Ansprüche 14 bis 17,
**dadurch gekennzeichnet, dass**
das ungesicherte Internetprotokoll TCP/IP für die verbindungslose ETCS-Mobilfunkkommunikation im Kommunikationsrechner (20) separiert wird, beispielsweise mittels NETWORK NAMESPACES Technologie, so dass dieses von den übrigen Funktionen im Kommunikationsrechner (20) entkoppelt abläuft und vom Kommunikationsrechner (20) jederzeit in seinen Anfangszustand zurückgesetzt werden kann.

## Claims

1. Communication arrangement (1) for a rail vehicle (100) for operating a mobile radio communication with a track-side facility (300), wherein the communication arrangement (1) has a vehicle computer (10), a communication computer (20), at least one protection facility (31, 32) and at least one mobile radio facility (41, 42) for a radio connection (F) with the track-side facility (300), wherein the communication arrangement (1) is an ETCS-compatible arrangement, the vehicle computer (10) is an EVC (European Vital Computer) according to the ETCS standard and the communication computer (20) is less secure than the vehicle computer (10) in terms of signalling, and
wherein
- the vehicle computer (10) and the mobile radio facility (41, 42) are not connected to one another directly, but rather by means of the communication computer (20) (NVC) and the protection facility (31, 32),
- the communication computer (20) is connected to the vehicle computer (10) via at least one computer-side interface (Sr) and to the protection facility (31, 32) via at least one protection facility-side interface (Ssl, Ss2) and
- the protection facility (31, 32) is connected to the at least one mobile radio facility (41, 42) via a mobile radio device interface (Sm1, Sm2), wherein the protection facility-side interface (Ssl, Ss2) differs from the mobile radio device interface (Sm1, Sm2) or is operated in a different manner therefrom and additionally differs from the computer-side interface (Sr) or is operated in a different manner therefrom, wherein the protection facility (31, 32) is embodied in such a manner that the following functions are operated in a protected manner:
- unsecured EURORADIO protocols for connection-oriented mobile radio communication and for connectionless mobile radio communication,
- communication protocols of the respective mobile radio device interface and
- communication protocols of the respective protection facility-side interface (Ssl, Ss2) with the communication computer (20).

2. Communication arrangement (1) according to claim 1,
**characterised in that**
the communication computer (20) and the protection facility (31, 32) are each formed by a separate computer facility.

3. Communication arrangement (1) according to claim 1,
**characterised in that**
the protection facility (31, 32) is formed by a virtual computer (VR1, VR2) within a computing arrangement (20a) which also forms the communication computer (20).

4. Communication arrangement (1) according to one of the preceding claims,
**characterised in that**
the protection facility (31, 32) is implemented as software within a computing arrangement (20a) which also forms the communication computer (20) and is formed by separating the Internet Protocol TCP/IP from any remaining non-secure EURORADIO and communication protocols, for example by means of network namespaces technology, within the communication computer (20).

5. Communication arrangement (1) according to one of the preceding claims,
**characterised in that**
- the communication arrangement (1) has a first and a second protection facility (31, 32) and a first and a second mobile radio facility (41, 42),
- the communication computer (20) is connected to the first protection facility (31) via at least one first protection facility-side interface (Ssl) and to the second protection facility (32) via at least one second protection facility-side interface (Ss2) and
- the first protection facility (31) is connected to the first mobile radio facility (41) via a first mobile radio device interface (Sm1) and the second protection facility (32) is connected to the second mobile radio facility (42) via a second mobile radio device interface (Sm2),
- wherein the first and second protection facility-side interface (Ssl, Ss2) differ from the first and second mobile radio device interface (Sm1, Sm2) or are operated in a different manner therefrom and additionally differ from the computer-side interface (Sr) or are operated in a different manner therefrom.

6. Communication arrangement (1) according to one of the preceding claims,
**characterised in that**
the communication computer (20) is embodied in such a manner that it operates:
- functions for the management and control of the protection facility (31, 32) and the at least one mobile radio device as well as
- transfer protocols for coupling to the computer-side interface (Sr) and the protection facility-side interface (Ssl, Ss2).

7. Communication arrangement (1) according to one of the preceding claims,
**characterised in that**
the communication computer (20) and each of the protection facilities (31, 32) are in each case coupled via three logical interfaces (LS1, LS2, LS3), namely
- a first logical interface (LS1) for delivering control commands from the communication computer (20) to the respective protection facility (31, 32) and responses from the respective protection facility (31, 32) to the communication computer (20),
- a second logical interface (LS2) for bidirectional transport of payload of the ETCS application and
- a third logical interface (LS3) for resetting the respective protection facility (31, 32) by way of the communication computer (20).

8. Communication arrangement (1) according to one of the preceding claims,
**characterised in that**
the communication computer (20) is connected to each mobile radio facility (41, 42) via an interface (LS4) for resetting the mobile radio facility (41, 42) connected to the respective protection facility (31, 32) by way of the communication computer (20).

9. Communication arrangement (1) according to one of the preceding claims,
**characterised in that**
software running on the protection facility or facilities (31, 32) is protected against unwanted change, preferably by hardware-based integrity protection.

10. Communication arrangement (1) according to one of the preceding claims,
**characterised in that**
the interface or interfaces (Ssl, Ss2) between the communication computer (20) and the protection facility or facilities (31, 32) are protected against cyber attacks.

11. Communication arrangement (1) according to one of the preceding claims,
**characterised in that**
the forwarding of data streams and the management and control functions in the communication computer (20) are at least partially monitored, checked for plausibility and protected against cyber attacks.

12. Communication arrangement (1) according to one of the preceding claims,
**characterised in that**
the coupling between the communication computer (20) and the vehicle computer (10) is protected against cyber attacks, whereby it is possible to defend against cyber attacks on the vehicle computer (10).

13. Vehicle (100), which is embodied as a rail vehicle,
**characterised in that**
this is equipped with a communication arrangement (1) according to one of the preceding claims.

14. Method for operating a mobile radio communication between a rail vehicle (100) and a track-side facility (300), wherein the rail vehicle (100) has a vehicle computer (10), a communication computer (20), at least one protection facility (31, 32) and at least one mobile radio facility (41, 42) for a radio connection (F) with the track-side facility (300), wherein the communication arrangement (1) is an ETCS-compatible arrangement, the vehicle computer (10) is an EVC (European Vital Computer) according to the ETCS standard and the communication computer (20) is less secure than the vehicle computer (10) in terms of signalling,
wherein
- information is not transferred directly between the vehicle computer (10) and the mobile radio facility (41, 42), but rather indirectly via the communication computer (20) (NVC) and the at least one protection facility (31, 32), wherein the communication computer (20) is connected to the vehicle computer (10) via a computer-side interface (Sr) and to the at least one protection facility (31, 32) via a protection facility-side interface (Ssl, Ss2) and the protection facility (31, 32) is connected to the at least one mobile radio facility (41, 42) via a mobile radio device interface (Sm1, Sm2), and
- the at least one protection facility-side interface (Ssl, Ss2) differs from the mobile radio device interface (Sm1, Sm2) or is operated in a different manner therefrom and additionally differs from the computer-side interface (Sr) or is operated in a different manner therefrom, wherein the protection facility (31, 32) is embodied in such a manner that the following functions are operated in a protected manner:
- unsecured EURORADIO protocols for connection-oriented mobile radio communication and for connectionless mobile radio communication,
- communication protocols of the respective mobile radio device interface and
- communication protocols of the respective protection facility-side interface (Ssl, Ss2) with the communication computer (20).

15. Method according to claim 14,
**characterised in that**
in the event of identified cyber attacks, a reset command is output by the communication computer (20) to the affected mobile radio facility (41, 42) or the affected protection facility (31, 32), whereby blocks and malfunctions of said components, for example triggered by DoS attacks, can be terminated at any time.

16. Method according to one of the preceding claims 14 to 15,
**characterised in that**
in the event of identified cyber attacks, messages relating to the affected mobile radio facility (41, 42) or the affected protection facility (31, 32) are generated and stored by the communication computer (20), which allow conclusions to be drawn with regard to the events which have taken place and their effects in the vehicle (100).

17. Method according to one of the preceding claims 14 to 16,
**characterised in that**
unsecured communication protocols for the connection-oriented and connectionless ETCS mobile radio communication are arranged in a virtual computer environment in the communication computer (20), meaning that these run in an uncoupled manner from the remaining functions in the communication computer (20) and can be reset to their initial state by the communication computer (20) at any time.

18. Method according to one of the preceding claims 14 to 17,
**characterised in that**
the unsecured Internet Protocol TCP/IP for the connectionless ETCS mobile radio communication in the communication computer (20) is separated, for example by means of network namespaces technology, meaning that it runs in an uncoupled manner from the remaining functions in the communication computer (20) and can be reset to its initial state by the communication computer (20) at any time.

## Revendications

1. Montage (1) de communication d'un véhicule (100) ferroviaire pour le fonctionnement d'une radiocommunication mobile avec un dispositif (300) sur la voie, dans lequel le montage (1) de communication a un ordinateur (10) de véhicule, un ordinateur (20) de communication, au moins un dispositif (31, 32) de protection et au moins un dispositif (41, 42) de radiocommunication mobile pour une liaison (F) radio avec le dispositif (300) sur la voie, dans lequel le montage (1) de communication est un montage compatible ETCS, l'ordinateur (10) du véhicule est un ordinateur EVC (European Vital Computer) suivant la norme ETCS et l'ordinateur (20) de communication est moins sécurisé en technique du signal que l'ordinateur (10) du véhicule, et
dans lequel
- l'ordinateur (10) du véhicule et le dispositif (41, 42) de radiocommunication mobile sont reliés l'un à l'autre, non directement, mais au moyen de l'ordinateur (20) de communication (NVC) et du dispositif (31, 32) de protection,
- l'ordinateur (20) de communication est, par au moins une interface (Sr) du côté de l'ordinateur, en liaison avec l'ordinateur (10) du véhicule et, par au moins une interface (Ssl, Ss2) du côté du dispositif de protection, avec le dispositif (31, 32) de protection, et
- le dispositif (31, 32) de protection est en liaison avec le au moins un dispositif (41, 42) de radiocommunication mobile, par une interface (Sm1, Sm2) d'appareil de radiocommunication mobile, dans lequel l'interface (Ssl, Ss2) du côté du dispositif de protection est différente de l'interface (Sm1, Sm2) de l'appareil de radiocommunication mobile, ou fonctionne autrement que celle-ci et est différente, en outre, de l'interface (Sr) du côté de l'ordinateur ou fonctionne autrement que celle-ci, dans lequel le dispositif (31, 32) de protection est constitué de manière à faire fonctionner, d'une manière protégée, les fonctions suivantes :
- protocole Euroradio non sécurisé pour une communication de radiocommunication mobile orientée liaison et pour une communication de radiocommunication mobile sans liaison,
- protocole de communication de l'interface de l'appareil de radiocommunication mobile respectif, et
- protocole de communication de l'interface (Ssl, Ss2) respective du côté du dispositif de protection vers l'ordinateur (20) de communication.

2. Montage (1) de communication suivant la revendication 1,
**caractérisé en ce que**
l'ordinateur (20) de communication et le dispositif (31, 32) de protection sont formés chacun par un dispositif informatique propre.

3. Montage (1) de communication suivant la revendication 1,
**caractérisé en ce que**
le dispositif (31, 32) de protection est formé par un ordinateur (VR1, VR2) virtuel au sein d'un montage (20a) informatique formant également l'ordinateur (20) de communication.

4. Montage (1) de communication suivant l'une des revendications précédentes,
**caractérisé en ce que**
le dispositif (31, 32) de protection est mis en œuvre en logiciel au sein d'un montage (20a) informatique formant également l'ordinateur (20) de communication et est formé, au sein de l'ordinateur (20) de communication, par séparation du protocole Internet TCP/IP, des autres protocoles Euroradio et de communication non sécurisés, par exemple au moyen de la technologie NETWORK NAMESPACES.

5. Montage (1) de communication suivant l'une des revendications précédentes,
**caractérisé en ce que**
- le montage (1) de communication a un premier et un deuxième dispositifs (31, 32) de protection et un premier et un deuxième dispositifs (41, 42) de radiocommunication mobile,
- l'ordinateur (20) de communication est en liaison avec le premier dispositif (31) de protection par au moins une première interface (Ssl) du côté du dispositif de protection et, avec le deuxième dispositif (32) de protection, par au moins une deuxième interface (Ss2) du côté du dispositif de protection, et
- le premier dispositif (31) de protection est en liaison avec le premier dispositif (41) de radiocommunication mobile par une première interface (Sm1) de radiocommunication mobile, et le deuxième dispositif (32) de protection avec le deuxième dispositif (42) de radiocommunication mobile, par une deuxième interface (Sm2) d'appareil de radiocommunication mobile,
- dans lequel la première et la deuxième interfaces (Ssl, Ss2) du côté du dispositif de protection sont différentes de la première et de la deuxième interfaces (Sm1, Sm2) d'appareil de radiocommunication mobile ou fonctionnent autrement que celles-ci et sont différentes en outre de l'interface (Sr) du côté de l'ordinateur ou fonctionnent autrement que celles-ci.

6. Montage (1) de communication suivant l'une des revendications précédentes,
**caractérisé en ce que**
l'ordinateur (20) de communication est constitué de manière à ce que fonctionnent par celui-ci :
- des fonctions de gestion et de commande du dispositif (31, 32) de protection et du au moins un appareil de radiocommunication mobile, ainsi que
- des protocoles de transmission pour le couplage à l'interface (Sr) du côté de l'ordinateur et aux interfaces (Ssl, Ss2) du côté du dispositif de protection.

7. Montage (1) de communication suivant l'une des revendications précédentes,
**caractérisé en ce que**
l'ordinateur (20) de communication et chacun des dispositifs (31, 32) de protection sont couplés respectivement par trois interfaces (LS1, LS2, LS3) logiques à savoir :
- une première interface (LS1) logique pour la transmission d'instructions de commande de l'ordinateur (20) de communication au dispositif (31, 32) de protection respectif et de messages d'accusé de réception du dispositif (31, 32) de protection respectif à l'ordinateur (20) de communication,
- une deuxième interface (LS2) logique pour le transport bidirectionnel de données utiles de l'application ETCS, et
- une troisième interface (LS3) logique pour la remise à l'état initial du dispositif (31, 32) de protection respectif par l'ordinateur (20) de communication.

8. Montage (1) de communication suivant l'une des revendications précédentes,
**caractérisé en ce que**
l'ordinateur (20) de communication est relié à chaque dispositif (41, 42) de radiocommunication mobile par une interface (LS4) pour la remise à l'état initial par l'ordinateur (20) de communication du dispositif (41, 42) de radiocommunication mobile raccordé au dispositif (31, 32) de protection respectif.

9. Montage (1) de communication suivant l'une des revendications précédentes,
**caractérisé en ce que**
le logiciel, se déroulant sur ou dans les dispositifs (31, 32) de protection, est protégé de modifications intempestives, de préférence par une protection d'intégrité reposant sur du matériel.

10. Montage (1) de communication suivant l'une des revendications précédentes,
**caractérisé en ce que**
l'interface ou les interfaces (Ssl, Ss2), entre l'ordinateur (20) de communication et le ou les dispositifs (31, 32) de protection, sont protégées de cyberattaques.

11. Montage (1) de communication suivant l'une des revendications précédentes,
**caractérisé en ce que**
l'acheminement de flux de données et les fonctions de gestion et de commande dans l'ordinateur (20) de communication sont contrôlés au moins en partie, appréciés en vraisemblance et protégés de cyberattaques.

12. Montage (1) de communication suivant l'une des revendications précédentes,
**caractérisé en ce que**
le couplage entre l'ordinateur (20) de communication et l'ordinateur (10) du véhicule est protégé de cyberattaques, grâce à quoi des cyberattaques peuvent être parées sur l'ordinateur (10) du véhicule.

13. Véhicule (100), qui est constitué en véhicule ferroviaire,
**caractérisé en ce que**
celui-ci est équipé d'un montage (1) de communication suivant l'une des revendications précédentes.

14. Procédé pour faire fonctionner une radiocommunication mobile entre un véhicule (100) ferroviaire et un dispositif (300) sur la voie, dans lequel le véhicule (100) ferroviaire a un ordinateur (10) de véhicule, un ordinateur (20) de communication, au moins un dispositif (31, 32) de protection et au moins un dispositif (41, 42) de radiocommunication mobile pour une liaison (F) radio avec le dispositif (300) sur la voie, dans lequel le montage (1) de communication est un montage compatible ETCS, l'ordinateur (10) du véhicule est un ordinateur EVC (European Vital Computer) suivant la norme ETCS, et l'ordinateur (20) de communication est moins sécurisé en technique du signal que l'ordinateur (10) du véhicule, dans lequel
- on transmet des informations entre l'ordinateur (10) du véhicule et le dispositif (41, 42) de radiocommunication mobile, non directement entre eux, mais indirectement par l'ordinateur (20) de communication (NVC) et par le au moins un dispositif (31, 32) de protection, dans lequel l'ordinateur (20) de communication est en liaison avec l'ordinateur (10) du véhicule par une interface (Sr) du côté de l'ordinateur et avec le au moins un dispositif (31, 32) de protection par une interface (Ssl, Ss2) du côté du dispositif de protection, et le dispositif (31, 32) de protection est en liaison avec le au moins un dispositif (41, 42) de radiocommunication mobile par une interface (Sm1, Sm2) d'appareil de radiocommunication mobile, et
- la au moins une interface (Ssl, Ss2) du côté du dispositif de protection est différente de l'interface (Sm1, Sm2) de l'appareil de radiocommunication mobile ou fonctionne autrement que celle-ci et, en outre, est différente de l'interface (Sr) du côté de l'ordinateur ou fonctionne autrement que celle-ci, le dispositif (31, 32) de protection étant constitué de manière protéger les fonctions suivantes :
- protocole Euroradio non sécurisé pour une communication de radiocommunication mobile avec liaison et pour une communication de radiocommunication mobile sans liaison,
- protocole de communication de l'interface de l'appareil de radiocommunication mobile respectif, et
- protocole de communication de l'interface (Ssl, Ss2) respective du côté du dispositif de protection vers l'ordinateur (20) de communication.

15. Procédé suivant la revendication 14,
**caractérisé en ce que**
dans le cas de cyberattaques détectées, il est envoyé, de l'ordinateur (20) de communication au dispositif (41, 42) de radiocommunication mobile concerné ou au dispositif (31, 32) de protection concerné, une instruction de remise à l'état initial, grâce à quoi, il peut être mis à fin à tout instant à des blocages et à des fonctions défectueuses de ses composants déclenchés, par exemple, par des attaques DoS.

16. Procédé suivant l'une des revendications 14 à 15 précédentes,
**caractérisé en ce que**
dans le cas de cyberattaques détectées concernant le dispositif (41, 42) de radiocommunication mobile ou le dispositif (31, 32) de protection concerné, il est produit et mis en mémoire par l'ordinateur (20) de communication des messages, qui permettent de faire des déductions sur les événements, qui ont eu lieu, et sur leurs effets dans le véhicule (100).

17. Procédé suivant l'une des revendications 14 à 16 précédentes,
**caractérisé en ce que**
des protocoles de communication non sécurisés, pour la communication de radiocommunication ETCS orientée liaison et sans liaison, sont disposés dans un environnement informatique virtuel dans l'ordinateur (20) de communication, de sorte que ceux-ci peuvent se dérouler de manière découplée des autres fonctions dans l'ordinateur (20) de communication et peuvent être remis à leur état initial à tout instant par l'ordinateur (20) de communication.

18. Procédé suivant l'une des revendications 14 à 17 précédentes,
**caractérisé en ce que**
l'on sépare le protocole Internet TCP/IP non sécurisé, pour la radiocommunication mobile ETCS sans liaison dans l'ordinateur (20) de communication, par exemple au moyen de la technologie NETWORK NAMESPACES, de sorte que celui-ci peut se dérouler de manière découplée des autres fonctions dans l'ordinateur (20) de communication et peut être remis dans son état initial à tout instant par l'ordinateur (20) de communication.
